# FASCICULE DE BREVET EUROPEEN

(11) **EP 3 602 367 B1**
(45) Date de publication et mention de la délivrance du brevet: **31.03.2021**
(21) Numéro de dépôt: 18706802.8
(22) Date de dépôt: 06.02.2018
(51) Int. Cl.: G06F 21/44

(54) **PROCEDE D'APPAREILLAGE D'UN PERIPHERIQUE USB PAR UN HOTE**
VERFAHREN ZUM BESTÜCKEN EINES HOSTS MIT EINER USB-VORRICHTUNG
METHOD FOR EQUIPPING A HOST WITH A USB DEVICE

(30) Priorité: 24.03.2017 FR 1752450
(43) Date de publication de la demande: 05.02.2020
(73) Titulaire: Renault S.A.S., 92100 Boulogne-Billancourt (FR)
(72) Inventeur: DANIS, Frédéric, 78730 Saint Arnoult en Yvelines (FR)
(86) Numéro de dépôt international: PCT/FR2018/050292
(87) Numéro de publication internationale: WO 2018/172640

(56) Documents cités:
- EP-A1- 3 041 196
- GB-A- 2 533 106
- US-B1- 8 996 771
- "Universal Serial Bus Specification REVISION", 20000427 , vol. REVISION 2.0 27 avril 2000 (2000-04-27), pages 1-650, XP008147911, Extrait de l'Internet: URL:http://www.usb.org/developers/docs/usb _20_052510.zip [extrait le 2017-07-26]

## Description

### DOMAINE TECHNIQUE AUQUEL SE RAPPORTE L'INVENTION

La présente invention concerne de manière générale le domaine de l'USB, c'est-à-dire de la connexion de périphériques informatiques à un hôte conformément à la norme USB (de l'anglais « Universal Serial Bus » ou, en français, « Bus Universel en Série »).

Elle concerne plus particulièrement un procédé de reconnaissance d'un périphérique par un hôte, ce qu'on peut également appeler « procédé d'appareillage ».

Elle concerne également un hôte et un périphérique permettant de mettre en œuvre ce procédé.

### ARRIERE-PLAN TECHNOLOGIQUE

Le protocole USB est un protocole très utilisé dans le domaine de l'informatique pour permettre à deux appareils de communiquer, notamment parce qu'il est universellement utilisé par tous les fabricants d'appareils informatiques. Il est également utilisé dans le domaine de l'automobile.

Dans ce domaine, les véhicules embarquent un système d'exploitation qui est propre au fabricant du véhicule et qui permet d'offrir aux conducteurs des fonctions très variées, notamment de navigation, de radio, de climatisation...

Actuellement, les usagers des véhicules souhaitent pouvoir appareiller leurs propres téléphones mobiles (ou autres appareils mobiles intelligents) avec leurs véhicules, de façon à pouvoir profiter de fonctions propres à leurs téléphones. Ils souhaitent notamment pouvoir utiliser une application stockée dans leurs téléphones et dédiée à l'automobile (ci-après nommée « application téléphone-véhicule »). Une telle application téléphone-véhicule est par exemple déjà connue sous le nom de « Android Auto® » ou « Apple CarPlay® ».

C'est la raison pour laquelle les constructeurs souhaitent commercialiser des véhicules dont les systèmes d'exploitation comportent un logiciel (ci-après nommé « logiciel tiers » ou « logiciel d'exécution tiers ») spécialement conçu pour communiquer avec les téléphones mobiles utilisant l'application téléphone-véhicule. Le document EP3041196 A1 constitue un art antérieur pertinent.

La demanderesse a toutefois constaté que, depuis que les systèmes d'exploitation des véhicules embarquent ces logiciels tiers, certains périphériques USB qui étaient jusqu'alors supportés ne peuvent plus l'être. Autrement formulé, certains périphériques USB qui parvenaient à s'appareiller n'y parviennent plus.

### OBJET DE L'INVENTION

La présente invention est définie par les revendications indépendantes ci-jointes. Afin de remédier à l'inconvénient précité de l'état de la technique, la présente invention propose un procédé d'appareillage d'un périphérique avec un hôte, comprenant :
- une étape de détection du branchement d'une fiche USB du périphérique dans un port USB de l'hôte,
- une étape de réception par l'hôte d'un set principal de paramètres de réglage et d'un set alternatif de paramètres de réglage émis par le périphérique,
- une étape de vérification par l'hôte de sa capacité à communiquer avec le périphérique compte-tenu des paramètres de réglage du set principal,
- si le périphérique est capable de communiquer avec l'hôte avec les paramètres de réglage du set principal, une étape de chargement d'un logiciel d'exécution conventionnel permettant à l'hôte de communiquer avec le périphérique sur la base des paramètres de réglage du set principal, ou
- sinon :
   - une étape de vérification par l'hôte de sa capacité à communiquer avec le périphérique compte-tenu des paramètres de réglage du set alternatif, puis,
   - si le périphérique est capable de communiquer avec l'hôte avec les paramètres de réglage du set alternatif, une étape de chargement d'un logiciel d'exécution conventionnel permettant à l'hôte de communiquer avec le périphérique sur la base des paramètres de réglage du set alternatif.

Selon l'invention, au moins un premier des paramètres de réglage du set principal est irréalisable quel que soit l'hôte, de façon à ce que l'hôte considère qu'il n'est pas capable de communiquer avec le périphérique sur la base des paramètres de réglage du set principal.

Pour parvenir à cette invention, la demanderesse a recherché l'origine du problème d'appareillage expliqué supra. Elle a constaté que les systèmes d'exploitation embaqués dans les véhicules, depuis qu'ils comprennent les logiciels tiers (dont on rappelle qu'il s'agit des logiciels embarqués dans les véhicules afin de permettre aux usagers d'utiliser une application téléphone-véhicule stockée dans leur téléphone mobile), ne suivent plus le protocole édictée par la norme USB.

Elle s'est notamment aperçue que l'un de ces logiciels tiers force le processus d'appareillage à suivre une certification reposant sur la connexion USB mais différente du protocole USB classique, ce qui aboutit au rejet de certains périphériques non supportés par le logiciel tiers.

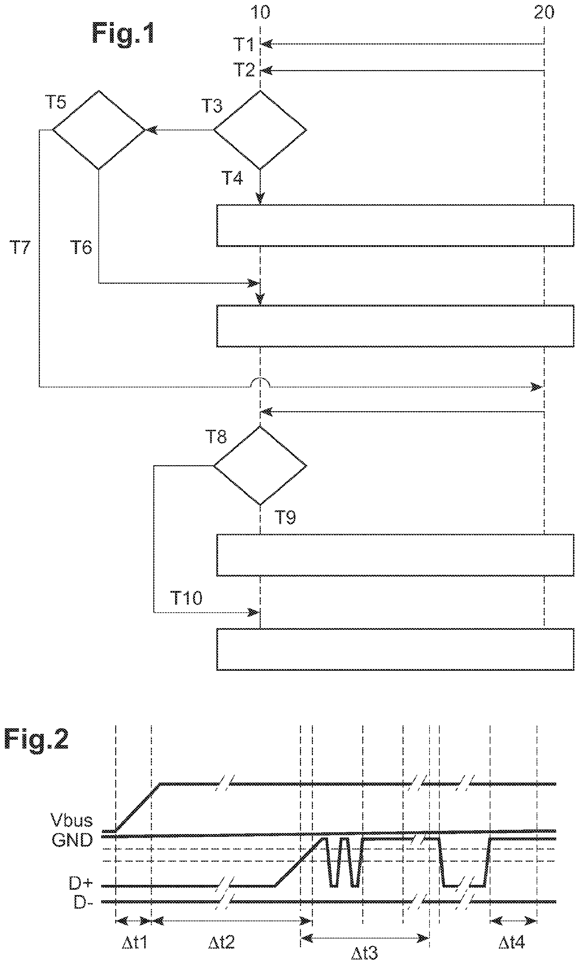

Pour bien illustrer le problème qui se pose, on a représenté sur la figure 1 le protocole de communication qui s'établit dans ce cas entre un périphérique 20 (typiquement un téléphone mobile) et un hôte 10 (typiquement le calculateur du véhicule automobile).

Au cours d'une première étape T1, le périphérique 20 est connecté à l'hôte 10 via son port USB.

Au cours d'une étape T2, le périphérique 20 envoie à l'hôte 10 un set principal de paramètres de réglage (identifiant du fabricant, identifiant du périphérique 20, intensité du courant nécessaire pour fonctionner, bande-passante nécessaire, ...).

Au cours d'une étape T3, l'hôte 10 vérifie si le périphérique 20 est du type auto-alimenté ou non.

Si le périphérique n'est pas du type auto-alimenté (clé USB, ...), l'hôte 10 peut en déduire que le périphérique 20 ne peut pas être un téléphone mobile embarquant l'application téléphone-véhicule. Alors, au cours d'une étape T4, l'hôte 10 charge un logiciel d'exécution conventionnel adapté au périphérique 20.

En revanche, si le périphérique est du type auto-alimenté (téléphone mobile, tablette, ...), l'hôte 10 en déduit qu'il se peut que le périphérique 20 soit un téléphone mobile embarquant l'application téléphone-véhicule. Alors, au cours de l'étape T5, l'hôte 10 recherche si le périphérique est de la marque du fabricant de l'application téléphone-véhicule (et éventuellement s'il embarque les informations relatives au support de l'application téléphone-véhicule).

Si tel est le cas, ce qui signifie que le périphérique 20 embarque l'application téléphone-véhicule, au cours de l'étape T6, l'hôte 10 charge alors le logiciel d'exécution tiers.

Si ce n'est pas le cas, l'hôte 10 cherche à savoir si le périphérique 20 embarque malgré cela l'application téléphone-véhicule (typiquement, certains téléphones non commercialisés par Google® peuvent embarquer Android Auto® si cette application a été au préalable téléchargée dans le téléphone concerné).

Pour lever ce doute, au cours de l'étape T7, l'hôte 10 envoie alors une requête au périphérique 20.

Au cours de l'étape T8, l'hôte 10 peut ainsi vérifier si le périphérique 20 embarque l'application téléphone-véhicule.

Si tel est le cas, au cours de l'étape T9, l'hôte 10 charge alors le logiciel d'exécution tiers, en substituant aux paramètres de réglage du périphérique 20 des paramètres de réglage compatibles avec le logiciel d'exécution tiers.

Dans le cas contraire, le processus s'interrompt à l'étape T10. La demanderesse a constaté que c'est à cause de cette étape que certains périphériques sont rejetés par l'hôte 10 alors qu'ils étaient jusqu'alors supportés.

En pratique, la demanderesse a ainsi pu constater qu'à partir de l'étape T7, le processus ne respecte plus rigoureusement le protocole édicté par la norme USB.

La demanderesse propose alors une solution qui suit le protocole édicté par la norme USB et qui offre aux fabricants de téléphones mobiles une solution pour leur permettre d'identifier très facilement les périphériques utilisant leur système d'exploitation, afin que l'hôte puisse alors charger le logiciel d'exécution tiers quand un tel périphérique y est branché.

Cette solution consiste à utiliser de manière détournée une fonction offerte par la norme USB et qui n'est presque jamais utilisée, à savoir l'utilisation de sets alternatifs de paramètres de réglage (en anglais, « alternate settings »).

Avant de décrire en quoi cette fonction est détournée, on peut tout d'abord décrire comment cette fonction est utilisée de façon classique.

Lorsqu'un hôte comporte plusieurs ports USB et qu'il est donc possible d'y connecter simultanément plusieurs périphériques, il convient que l'hôte vérifie à chaque branchement de périphérique s'il est en mesure de supporter tous ces périphériques (par exemple s'il est en mesure de tous les alimenter en courant).

S'il n'est pas en mesure de les supporter tous, le dernier périphérique branché n'est généralement pas accepté. C'est pour éviter un tel rejet que les sets alternatifs de paramètres de réglage ont été conçus.

Ainsi, lorsque l'un des périphériques comporte deux sets de réglage (le set principal et le set alternatif), la norme USB permet d'utiliser ce périphérique en mode dégradé (c'est-à-dire en utilisant le set alternatif de paramètres de réglage).

A titre d'exemple, pour bien comprendre cette fonction offerte par la norme USB, on peut considérer un périphérique particulier, à savoir une caméra USB (ou « webcam ») comportant un set de réglage principal permettant d'utiliser de manière poussée les capacités de la caméra (en haute définition) et un set de réglage alternatif permettant d'utiliser cette même caméra en mode dégradé (en basse définition, voire sans certaines fonctionnalités, telle que la fonctionnalité appareil photo). De cette façon, si l'hôte n'est pas en mesure d'utiliser de façon poussée la caméra, au lieu de la rejeter, il pourra l'utiliser de façon dégradée. De manière générale, le set de réglage alternatif permet tout de même d'utiliser le dispositif, mais de manière basique.

Ici, l'invention consiste à utiliser le set alternatif de paramètres de réglage afin d'y stocker les données nécessaires au bon fonctionnement du logiciel d'exécution tiers.

Le set principal de paramètres de réglage est quant à lui au contraire utilisé de façon à ce que l'hôte rejette systématiquement ce set de paramètres de réglage et qu'il en déduise automatiquement que le périphérique est compatible avec le logiciel d'exécution tiers.

Le set principal de paramètres de réglage est en effet conçu de façon à être impossible à satisfaire au sens du protocole USB et à servir d'identifiant pour permettre à l'hôte de détecter facilement que le périphérique est compatible avec le logiciel d'exécution tiers.

Cette solution présente de nombreux avantages.

Elle permet de suivre le protocole USB, si bien que les périphériques USB n'embarquant pas l'application téléphone-véhicule ne seront pas rejetés par l'hôte.

Cette solution est facilement déployable puisqu'elle nécessite seulement de modifier les réglages enregistrés dans les périphériques embarquant l'application téléphone-véhicule, par une simple mise à jour.

Elle est enfin utilisable même lorsque le système d'exploitation embarqué dans le véhicule stocke différents logiciels d'exécution tiers (adaptés à fonctionner avec des téléphones mobiles embarquant des systèmes d'exploitation différents) : il suffit pour cela d'utiliser des paramètres de réglages dont les valeurs sont non conformes au protocole USB et différentes selon que l'un ou l'autre des logiciels d'exécution tiers doit être chargé.

D'autres caractéristiques avantageuses et non limitatives du procédé de reconnaissance conforme à l'invention sont les suivantes :
- ledit premier paramètre de réglage du set principal présente une valeur non conforme à la norme USB ;
- ledit premier paramètre de réglage du set principal présente une valeur prédéterminée, qui est associée audit logiciel d'exécution tiers à charger
- ledit premier paramètre de réglage du set principal est relatif à une intensité électrique d'alimentation, dont la valeur est strictement supérieure à 500 milliampères, voire strictement supérieure à 900 milliampères (cette valeur pouvant être prise en pratique supérieure à 1 A, voire à 10 A, comme proposé plus loin) ;
- ledit premier paramètre de réglage du set principal est relatif à un nombre de canaux de communication (ou « IN/OUT Endpoints » selon l'appellation d'origine anglo-saxonne parfois utilisée), dont la valeur est strictement supérieure à 16 ;
- le périphérique est un téléphone ;
- l'hôte est embarqué dans un véhicule.

L'invention concerne aussi un hôte comprenant :
- un port USB adapté à recevoir une fiche USB d'un périphérique, et
- un calculateur qui est adapté à communiquer avec un contrôleur du périphérique au travers du port USB, et qui est adapté à mettre en œuvre un procédé de reconnaissance tel que précité.

Préférentiellement, le calculateur comporte une mémoire qui stocke un logiciel d'exécution tiers et une valeur prédéterminée pour un premier paramètre de réglage, ladite valeur étant irréalisable et étant associée audit logiciel d'exécution tiers de telle façon que lorsqu'un périphérique envoie à l'hôte un set principal de paramètres de réglage dans lequel le premier paramètre de réglage comporte cette valeur prédéterminée, l'hôte charge automatiquement ledit logiciel d'exécution tiers afin de communiquer avec ce périphérique.

L'invention concerne également un périphérique comprenant :
- une fiche USB adaptée à être engagée dans un port USB d'un hôte, et
- un contrôleur qui est adapté à communiquer avec un calculateur de l'hôte au travers de la fiche USB et qui comporte une mémoire stockant un set principal et un set alternatif de paramètres de réglage, au moins un premier des paramètres de réglage du set principal étant irréalisable quel que soit l'hôte, de façon à ce que l'hôte considère qu'il n'est pas capable de communiquer avec le périphérique sur la base des paramètres de réglage du set principal.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 présente les étapes principales d'un procédé conforme à l'état de l'art, permettant d'appareiller un périphérique USB avec un hôte ;
- la figure 2 présente les variations de grandeurs électriques pouvant être observées aux bornes d'un port USB lors de l'appareillage d'un périphérique USB avec un hôte, en particulier pendant les phases dites d'énumération ;
- la figure 3 présente les étapes principales d'un procédé conforme à l'invention, permettant d'appareiller un périphérique USB avec un hôte ; et
- la figure 4 est un exemple de contexte dans lequel peut être mise en œuvre l'invention.

L'invention porte de manière générale sur l'appareillage d'un quelconque périphérique USB avec un quelconque hôte.

A titre préliminaire, pour bien comprendre l'invention, on peut décrire en référence à la figure 2 la manière selon laquelle un périphérique s'appareille généralement à un hôte conformément au protocole USB.

On rappellera avant cela que le périphérique comporte dans sa mémoire au moins un set de paramètres de réglage permettant de la caractériser.

On rappellera aussi qu'une connectique USB comporte au moins quatre bornes électriques, dont deux bornes d'alimentation notées Vbus et GND, et deux bornes de communication notées D+ et D-.

On a représenté sur la figure 2 les variations des tensions qui peuvent être mesurées sur ces quatre bornes électriques lorsqu'on branche un périphérique sur un hôte.

Dans un premier laps de temps Δt1, la tension à la borne d'alimentation Vbus augmente, ce qui permet d'alimenter en courant le périphérique.

Dans un second laps de temps Δt2 ne devant pas dépasser 100ms, le périphérique se signale à l'hôte en envoyant un signal sur la borne D+ (ou D-).

Dans un troisième laps de temps Δt3 ne devant pas dépasser 100ms, le périphérique fait varier la tension sur la borne D+ (ou D-) afin que l'hôte puisse vérifier que la connexion est stable, le périphérique ayant transmis ses paramètres à l'hôte (l'hôte pouvant ainsi réinitialiser le périphérique avec les paramètres de réglage lors de la phase de réinitialisation ou « reset » selon l'appellation anglo-saxonne couramment utilisée).

Dans un quatrième laps de temps Δt4, l'hôte connaissant les capacités du périphérique, l'hôte monte la classe logicielle (ou « driver » selon l'appellation anglo-saxonne couramment utilisée) associée au périphérique et configure son fonctionnement (numéro de canal, puissance autorisée) pour que le système soit fonctionnel. Jusqu'à la réinitialisation, il s'agit de la phase dite d'énumération.

Maintenant que le processus classique d'appareillage d'un périphérique avec un hôte a été décrit, on peut exposer plus en détail un mode particulier de réalisation de l'invention.

L'invention pourra être mise en œuvre sur tout type d'hôte. Dans le mode de réalisation ici décrit, l'hôte sera embarqué dans un véhicule automobile.

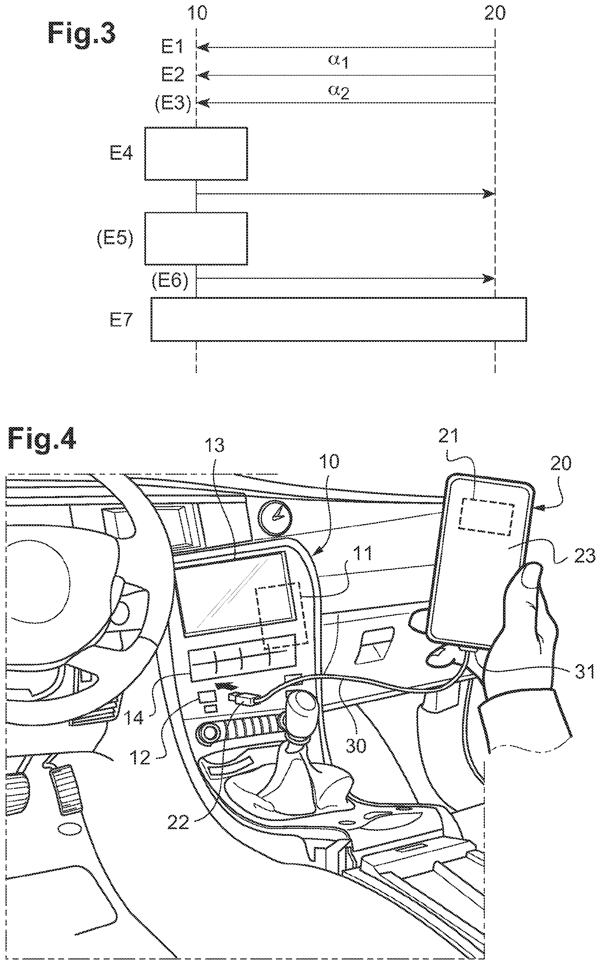

Sur la figure 4, on a représenté une partie d'un habitacle d'un tel véhicule automobile, sur laquelle apparaît la console centrale 10 du véhicule automobile et un téléphone mobile 20 tenu en main par le conducteur du véhicule automobile.

Dans la suite de la description, on considérera que la console centrale 10 a une fonction d'hôte et que le téléphone mobile 20 a une fonction de « périphérique USB ». En variante, le périphérique USB pourrait être formé par tout autre type d'appareil électronique, par exemple par une tablette informatique.

Le téléphone mobile 20 est un téléphone intelligent (ou « smartphone ») qui comporte classiquement un châssis qui loge un contrôleur et dans lequel sont enchâssés un écran tactile 23 et un connecteur externe.

Ce téléphone mobile 20 est ici équipé d'un fil électrique 30 qui comporte, d'un côté, une fiche 31 branchée dans le port externe du téléphone mobile 20, et, de l'autre, une fiche USB 22.

Le contrôleur 21 comporte un processeur (CPU), une mémoire vive (RAM), une mémoire morte (ROM), et différentes interfaces.

Grâce à ses interfaces, le contrôleur 21 est notamment adapté à communiquer avec un quelconque hôte via la fiche USB 22.

La mémoire morte du contrôleur 21 mémorise des données utilisées dans le cadre du procédé décrit ci-dessous.

Elle mémorise notamment un système d'exploitation (typiquement Androïd® ou iOS® sans que cela soit limitatif), différentes applications, et au moins un set de paramètres de réglages spécialement conçu pour permettre son appareillage sur un quelconque hôte (ce set étant utilisé lors de la phase d'énumération).

Chaque set de paramètres de réglage comporte différentes données, dont par exemple :
- un identifiant constructeur, qui permet d'identifier le constructeur du téléphone mobile,
- un identifiant appareil, qui permet d'identifier le type du périphérique (ici un téléphone mobile),
- une intensité d'alimentation nécessaire pour permettre au périphérique de fonctionner,
- un nombre de canaux de communication (en anglais « Endpoints IN/OUT ») nécessaires pour permettre au périphérique de communiquer avec l'hôte.

Dans la suite de la description, on considérera deux téléphones mobiles 20 différents, respectivement appelés « téléphone mobile standard » et « téléphone mobile évolué ».

Le téléphone mobile évolué se distinguera du téléphone mobile standard en ce que sa mémoire morte stockera :
- un set alternatif α₂ de paramètres de réglage (en sus du set principal α₁), et
- une « application automobile », c'est-à-dire une application qui est conçue pour permettre d'utiliser avantageusement le téléphone mobile dans un véhicule automobile (une telle application automobile est par exemple déjà connue sous le nom de « Android Auto® » ou « Apple CarPlay® »).

Selon une caractéristique particulièrement avantageuse de l'invention et pour une raison qui apparaîtra clairement dans la suite de cet exposé, le set principal α₁ enregistré dans le téléphone mobile évolué comporte au moins un paramètre de réglage qui est irréalisable quel que soit l'hôte, puisque sa valeur est non conforme à la norme USB.

Typiquement, ce paramètre de réglage irréalisable pourra correspondre à une requête d'alimentation en courant électrique d'intensité strictement supérieure à 500 mA (la norme USB 2.0 prévoit qu'un port USB ne saurait délivrer un courant d'intensité supérieure à 500 mA), par exemple égale à 20 A ou à 50 A (valeur irréalisable).

Selon un autre exemple, ce paramètre de réglage irréalisable pourra correspondre à une requête de canaux de communication pour communiquer avec l'hôte qui est strictement supérieure à 16 (la norme USB prévoit qu'un hôte dispose au plus de 16 canaux de communication).

De cette façon, le set principal α₁ sera toujours rejeté par l'hôte et ce sera le set alternatif α₂ qui sera considéré.

Dans le téléphone mobile évolué, le set principal α₁ est alors simplement utilisé en tant qu'identifiant, pour signifier à l'hôte qu'il embraque une application automobile.

La valeur du paramètre de réglage irréalisable pourra alors être choisie de façon à ce que l'hôte puisse en déduire quelle application automobile le téléphone mobile évolué embarque.

Typiquement, le paramètre de réglage irréalisable pourra prendre une première valeur prédéterminée lorsque l'application automobile sera « Android Auto® », et une seconde valeur prédéterminée différente de la première lorsque l'application automobile sera « Apple CarPlay® ».

Comme le montre la figure 4, la console centrale 10 comporte ici un écran tactile 13, un jeu de boutons de commande 14, au moins un port USB 12, et un calculateur 11.

La console centrale 10 est conçue pour offrir différentes fonctions d'agrément et d'aide à la conduite au conducteur du véhicule automobile. Pour offrir ces fonctions et pour piloter l'écran tactile 13, le calculateur 11 comportant un processeur (CPU), une mémoire vive (RAM), une mémoire morte (ROM), et différentes interfaces.

Grâce à ses interfaces, le calculateur 11 est notamment adapté à communiquer avec un quelconque périphérique via le port USB 12. Il est notamment adapté à communiquer avec le téléphone mobile 20 lorsque sa fiche USB 22 est branchée dans le port USB 12.

La mémoire morte mémorise des données utilisées dans le cadre du procédé décrit ci-dessous.

Elle mémorise notamment un système d'exploitation et des logiciels d'exécution (ou « drivers ») permettant l'appareillage de différents types de périphériques.

Parmi ces logiciels d'exécution, on distinguera ici :
- les « logiciels d'exécution conventionnels » permettant au calculateur 11 du véhicule de communiquer avec des périphériques dépourvus d'application automobile (clé USB, téléphone mobile standard, ....), et
- les « logiciels d'exécution tiers », qui sont des logiciels spécialement conçus pour permettre au calculateur 11 du véhicule de communiquer avec une application automobile particulière embarquée dans un téléphone mobile évolué.

On pourra ici considérer que le calculateur 11 embarque un logiciel d'exécution tiers associé à l'application automobile « Android Auto® », et un logiciel d'exécution tiers associé à l'application automobile « Apple CarPlay® ».

La mémoire du calculateur 11 mémorise aussi une application informatique, constituée de programmes d'ordinateur comprenant des instructions dont l'exécution par le processeur permet la mise en œuvre par le calculateur du procédé décrit ci-après, en référence à la figure 3.

Ce procédé d'appareillage est mis en œuvre en plusieurs étapes successives, notées E1 à E7. Sur la figure 3, les étapes notées entre parenthèses sont les étapes qui ne sont pas nécessairement mises en œuvre.

La première étape E1 de ce procédé intervient dès qu'un quelconque périphérique est connecté sur le port USB 12 de la console centrale 10 du véhicule. Dans l'exemple illustré, il s'agit d'un téléphone mobile 20 standard ou évolué.

Cette première étape E1 correspondant aux étapes qui se succèdent durant les laps de temps Δt1 à Δt3 décrits précédemment en référence à la figure 2.

Une fois cette étape E1 accomplie, il est prévu une phase d'énumération comprenant une étape E2 ou deux étapes E2 et E3.

Au cours de l'étape E2, le périphérique 20 transmet à l'hôte 10 son set principal α₁ de paramètres de réglage.

S'il comporte un set alternatif α₂ de paramètres de réglage, au cours de l'étape E3, le périphérique transmet ensuite à l'hôte 10 ce set alternatif α₂ de paramètres de réglage.

On comprend, dans l'exemple qui nous intéresse, que dans le cas d'un téléphone mobile standard, seule l'étape E2 est mise en œuvre. Au contraire, dans le cas d'un téléphone mobile évolué, les étapes E2 et E3 sont toutes deux mises en œuvre.

Quoiqu'il en soit, le procédé se poursuit en une étape E4, au cours de laquelle l'hôte 10 lit les paramètres de réglage du set principal α₁.

Dans le cas d'un téléphone mobile standard, ces paramètres de réglage sont généralement considérés par l'hôte 10 comme utilisables, si bien que le procédé se poursuit en une étape E7 (décrite ci-après).

Au contraire, dans le cas d'un téléphone mobile évolué, ces paramètres de réglage sont considérés par l'hôte 10 comme inutilisables. L'hôte 10 en déduit alors que le périphérique 20 est un téléphone mobile évolué.

L'hôte 10 lit alors la valeur du paramètre de réglage irréalisable, dont on rappelle qu'il sert d'identifiant, et il en déduit quel est le logiciel d'exécution tiers qu'il devra charger.

Puis, le procédé se poursuit en une étape E5 au cours de laquelle l'hôte 10 lit les paramètres de réglage du set alternatif α₂.

Au cours de l'étape E6, l'hôte 10 informe le périphérique 20 qu'il devra considérer les paramètres de réglage du set alternatif α₂.

Enfin, au cours de l'étape E7, l'hôte réinitialise le processus (on parle de « reset ») afin d'affecter une adresse au périphérique 20 et de charger un logiciel d'exécution permettant à l'hôte 10 de fonctionner de paire avec le périphérique 20.

On comprend, dans l'exemple qui nous intéresse, que dans le cas d'un téléphone mobile 20 standard, il s'agira d'un logiciel d'exécution conventionnel, tandis que dans le cas d'un téléphone mobile 20 évolué, il s'agira d'un logiciel d'exécution tiers correspondant à l'application automobile utilisée dans le téléphone mobile 20 évolué.

La présente invention n'est nullement limitée au mode de réalisation décrit et représenté, mais l'homme du métier saura y apporter toute variante conforme à l'invention.

Ainsi, le paramètre de réglage du set principal α₁ qui présente une valeur irréalisable (non conforme à la norme USB) pourra être un paramètre autre que l'intensité du courant d'alimentation ou le nombre de canaux de communication.

Par ailleurs, le port USB pourra être conforme à n'importe quelle norme USB (1.1, 2.0, 3.0, 3.1, ...), sans que cela n'affecte sensiblement le processus d'appareillage décrit ci-dessus.

## Revendications

1. Procédé de reconnaissance d'un périphérique (20) par un hôte (10), comprenant :
- une étape de détection du branchement d'une fiche USB (22) du périphérique (20) dans un port USB (12) de l'hôte (10),
- une étape de réception par l'hôte (10) d'un set principal (α₁) de paramètres de réglage et d'un set alternatif (α₂) de paramètres de réglage émis par le périphérique (20),
- une étape de vérification par l'hôte (10) de sa capacité à communiquer avec le périphérique (20) compte-tenu des paramètres de réglage du set principal (α₁),
- si le périphérique (20) est capable de communiquer avec l'hôte (10) avec les paramètres de réglage du set principal (α₁), une étape de chargement d'un logiciel d'exécution conventionnel permettant à l'hôte (10) de communiquer avec le périphérique (20) sur la base des paramètres de réglage du set principal (α₁), ou
- sinon :
- une étape de vérification par l'hôte (10) de sa capacité à communiquer avec le périphérique (20) compte-tenu des paramètres de réglage du set alternatif (α₂), puis,
- si le périphérique (20) est capable de communiquer avec l'hôte (10) avec les paramètres de réglage du set alternatif (α₂), une étape de chargement d'un logiciel d'exécution tiers permettant à l'hôte (10) de communiquer avec le périphérique (20) sur la base des paramètres de réglage du set alternatif (α₂),
**caractérisé en ce qu'**au moins un premier des paramètres de réglage du set principal (α₁) est irréalisable quel que soit l'hôte (10), de façon à ce que l'hôte (10) considère qu'il n'est pas capable de communiquer avec le périphérique (20) sur la base des paramètres de réglage du set principal (α₁).

2. Procédé de reconnaissance selon la revendication précédente, dans lequel ledit premier paramètre de réglage du set principal (α₁) présente une valeur non conforme à la norme USB.

3. Procédé de reconnaissance selon l'une des revendications précédentes, dans lequel ledit premier paramètre de réglage du set principal (α₁) présente une valeur prédéterminée, qui est associée audit logiciel d'exécution tiers à charger.

4. Procédé de reconnaissance selon l'une des revendications précédentes, dans lequel ledit premier paramètre de réglage du set principal (α₁) est relatif à une intensité électrique d'alimentation, dont la valeur est strictement supérieure à 500 mA.

5. Procédé de reconnaissance selon l'une des revendications précédentes, dans lequel ledit premier paramètre de réglage du set principal (α₁) est relatif à un nombre de canaux de communication, dont la valeur est strictement supérieure à 16.

6. Procédé de reconnaissance selon l'une des revendications précédentes, dans lequel le périphérique (20) est un téléphone.

7. Procédé de reconnaissance selon l'une des revendications précédentes, dans lequel l'hôte est embarqué dans un véhicule.

8. Hôte (10) comprenant :
- un port USB (12) adapté à recevoir une fiche USB (22) d'un périphérique (20), et
- un calculateur (11) qui est adapté à communiquer avec un contrôleur (21) du périphérique (20) au travers du port USB (12),
**caractérisé en ce que** le calculateur (11) est adapté à mettre en œuvre un procédé de reconnaissance conforme à l'une des revendications précédentes.

9. Hôte (10) selon la revendication précédente, dans lequel le calculateur (11) comporte une mémoire qui stocke un logiciel d'exécution tiers et une valeur prédéterminée pour un premier paramètre de réglage, ladite valeur étant irréalisable et étant associée audit logiciel d'exécution tiers de telle façon que lorsqu'un périphérique (20) envoie à l'hôte (10) un set principal (α₁) de paramètres de réglage dans lequel le premier paramètre de réglage comporte cette valeur prédéterminée, l'hôte (10) charge automatiquement ledit logiciel d'exécution tiers afin de communiquer avec ce périphérique (20).

10. Périphérique (20) comprenant :
- une fiche USB (22) adaptée à être engagée dans un port USB (21) d'un hôte (10),
- un contrôleur (21) qui est adapté à communiquer avec un calculateur (11) de l'hôte (10) au travers de la fiche USB (22) et qui comporte une mémoire stockant un set principal (α₁) et un set alternatif (α₂) de paramètres de réglage,
**caractérisé en ce qu'**au moins un premier des paramètres de réglage du set principal (α₁) est irréalisable quel que soit l'hôte (10), de façon à ce que l'hôte (10) considère qu'il n'est pas capable de communiquer avec le périphérique (20) sur la base des paramètres de réglage du set principal (α₁).

## Patentansprüche

1. Verfahren zur Erkennung eines Peripheriegeräts (20) durch einen Host (10), das enthält:
- einen Schritt der Erfassung des Einsteckens eines USB-Steckers (22) des Peripheriegeräts (20) in einen USB-Port (12) des Hosts (10),
- einen Schritt des Empfangs durch den Host (10) eines Hauptsatzes (α₁) von Einstellparametern und eines alternativen Satzes (α₂) von Einstellparametern, die vom Peripheriegerät (20) gesendet werden,
- einen Schritt der Überprüfung durch den Host (10) seiner Fähigkeit der Kommunikation mit dem Peripheriegerät (20) unter Berücksichtigung der Einstellparameter des Hauptsatzes (α₁),
- wenn das Peripheriegerät (20) mit dem Host (10) mit den Einstellparametern des Hauptsatzes (α₁) kommunizieren kann, einen Schritt des Ladens einer üblichen Ausführungssoftware, die es dem Host (10) ermöglicht, mit dem Peripheriegerät (20) auf der Basis der Einstellparameter des Hauptsatzes (α₁) zu kommunizieren, oder
- sonst:
- einen Schritt der Überprüfung durch den Host (10) seiner Fähigkeit der Kommunikation mit dem Peripheriegerät (20) unter Berücksichtigung der Einstellparameter des alternatives Satzes (α₂), dann
- wenn das Peripheriegerät (20) mit dem Host (10) mit den Einstellparametern des alternativen Satzes (α₂) kommunizieren kann, einen Schritt des Ladens einer Ausführungs-Drittsoftware, die es dem Host (10) ermöglicht, auf der Basis der Einstellparameter des alternativen Satzes (α₂) mit dem Peripheriegerät (20) zu kommunizieren,
**dadurch gekennzeichnet, dass** mindestens ein erster der Einstellparameter des Hauptsatzes (α₁) nicht durchführbar ist, unabhängig davon, wer der Host (10) ist, so dass der Host (10) annimmt, dass er nicht in der Lage ist, mit dem Peripheriegerät (20) auf der Basis der Einstellparameter des Hauptsatzes (α₁) zu kommunizieren.

2. Erkennungsverfahren nach dem vorhergehenden Anspruch, wobei der erste Einstellparameter des Hauptsatzes (α₁) einen nicht der USB-Norm entsprechenden Wert aufweist.

3. Erkennungsverfahren nach einem der vorhergehenden Ansprüche, wobei der erste Einstellparameter des Hauptsatzes (α₁) einen vorbestimmten Wert aufweist, der der zu ladenden Ausführungs-Drittsoftware zugeordnet ist.

4. Erkennungsverfahren nach einem der vorhergehenden Ansprüche, wobei der erste Einstellparameter des Hauptsatzes (α₁) sich auf eine Stromversorgungsstärke bezieht, deren Wert strikt höher ist als 500 mA.

5. Erkennungsverfahren nach einem der vorhergehenden Ansprüche, wobei der erste Einstellparameter des Hauptsatzes (α₁) sich auf eine Anzahl von Kommunikationskanälen bezieht, deren Wert strikt höher als 16 ist.

6. Erkennungsverfahren nach einem der vorhergehenden Ansprüche, wobei das Peripheriegerät (20) ein Telefon ist.

7. Erkennungsverfahren nach einem der vorhergehenden Ansprüche, wobei der Host sich an Bord eines Fahrzeugs befindet.

8. Host (10), der enthält:
- einen USB-Port (12), der geeignet ist, einen USB-Stecker (22) eines Peripheriegeräts (20) aufzunehmen, und
- einen Rechner (11), der geeignet ist, mit einem Controller (21) des Peripheriegeräts (20) über den USB-Port (12) zu kommunizieren,
**dadurch gekennzeichnet, dass** der Rechner (11) geeignet ist, ein Erkennungsverfahren gemäß einem der vorhergehenden Ansprüche durchzuführen.

9. Host (10) nach dem vorhergehenden Anspruch, wobei der Rechner (11) einen Speicher aufweist, der eine Ausführungs-Drittsoftware und einen vorbestimmten Wert für einen ersten Einstellparameter speichert, wobei der Wert nicht durchführbar und der Ausführungs-Drittsoftware zugeordnet ist, so dass, wenn ein Peripheriegerät (20) an den Host (10) einen Hauptsatz (α₁) von Einstellparametern sendet, in dem der erste Einstellparameter diesen vorbestimmten Wert aufweist, der Host (10) automatisch diese Ausführungs-Drittsoftware lädt, um mit diesem Peripheriegerät (20) zu kommunizieren.

10. Peripheriegerät (20), das enthält:
- einen USB-Stecker (22), der in einen USB-Port (21) eines Hosts (10) eingesteckt werden kann,
- einen Controller (21), der geeignet ist, mit einem Rechner (11) des Hosts (10) über den USB-Stecker (22) zu kommunizieren, und der einen Speicher aufweist, der einen Hauptsatz (α₁) und einen alternativen Satz (α₂) von Einstellparametern speichert,
**dadurch gekennzeichnet, dass** mindestens ein erster der Einstellparameter des Hauptsatzes (α₁) nicht durchführbar ist, unabhängig davon, wer der Host (10) ist, so dass der Host (10) annimmt, dass er nicht in der Lage ist, auf der Basis der Einstellparameter des Hauptsatzes (α₁) mit dem Peripheriegerät (20) zu kommunizieren.

## Claims

1. Method for the recognition of a peripheral (20) by a host (10), comprising:
- a step of detecting the connection of a USB connector (22) of the peripheral (20) into a USB port (12) of the host (10),
- a step of reception by the host (10) of a main set (α₁) of settings and of an alternative set (α₂) of settings transmitted by the peripheral (20),
- a step of checking by the host (10) of its ability to communicate with the peripheral (20) taking into account the settings of the main set (α₁),
- if the peripheral (20) is able to communicate with the host (10) with the settings of the main set (α₁), a step of loading conventional execution software allowing the host (10) to communicate with the peripheral (20) on the basis of the settings of the main set (α₁), or
- otherwise:
- a step of checking by the host (10) of its ability to communicate with the peripheral (20) taking into account the settings of the alternative set (α₂), then,
- if the peripheral (20) is able to communicate with the host (10) with the settings of the alternative set (α₂), a step of loading third-party execution software allowing the host (10) to communicate with the peripheral (20) on the basis of the settings of the alternative set (α₂),
**characterized in that** at least a first of the settings of the main set (α₁) is impracticable regardless of the host (10), such that the host (10) considers that it is not able to communicate with the peripheral (20) on the basis of the settings of the main set (α₁).

2. Recognition method according to the preceding claim, wherein said first setting of the main set (α₁) has a value that is not in compliance with the USB standard.

3. Recognition method according to either of the preceding claims, wherein said first setting of the main set (α₁) has a predetermined value, which is associated with said third-party execution software to be loaded.

4. Recognition method according to one of the preceding claims, wherein said first setting of the main set (α₁) relates to a power supply amperage, the value of which is strictly greater than 500 mA.

5. Recognition method according to one of the preceding claims, wherein said first setting of the main set (α₁) relates to a number of communication channels, the value of which is strictly greater than 16.

6. Recognition method according to one of the preceding claims, wherein the peripheral (20) is a telephone.

7. Recognition method according to one of the preceding claims, wherein the host is on board a vehicle.

8. Host (10) comprising:
- a USB port (12) capable of accepting a USB connector (22) of a peripheral (20), and
- a computer (11) that is capable of communicating with a controller (21) of the peripheral (20) through the USB port (12),
**characterized in that** the computer (11) is capable of implementing a recognition method according to one of the preceding claims.

9. Host (10) according to the preceding claim, wherein the computer (11) comprises a memory that stores third-party execution software and a predetermined value for a first setting, said value being impracticable and being associated with said third-party execution software such that when a peripheral (20) sends the host (10) a main set (α₁) of settings in which the first setting comprises this predetermined value, the host (10) automatically loads said third-party execution software in order to communicate with this peripheral (20).

10. Peripheral (20) comprising:
- a USB connector (22) capable of being plugged into a USB port (21) of a host (10),
- a controller (21) that is capable of communicating with a computer (11) of the host (10) through the USB connector (22) and that comprises a memory storing a main set (α₁) and an alternative set (α₂) of settings,
**characterized in that** at least a first of the settings of the main set (α₁) is impracticable regardless of the host (10), such that the host (10) considers that it is not able to communicate with the peripheral (20) on the basis of the settings of the main set (α₁).
